(19) Europäisches Patentamt
European Patent Office
Office européen des brevets

(11) **EP 4 194 836 B1**

(12) **EUROPÄISCHE PATENTSCHRIFT**

(45) Veröffentlichungstag und Bekanntmachung des Hinweises auf die Patenterteilung:
**11.03.2026 Patentblatt 2026/11**

(21) Anmeldenummer: **22202682.5**

(22) Anmeldetag: **20.10.2022**

(51) Internationale Patentklassifikation (IPC):
**G01N 1/20** (2006.01)   **A01D 41/127** (2006.01)

(52) Gemeinsame Patentklassifikation (CPC):
**A01D 41/1277; G01N 1/2035**

(54) **MÄHDRESCHER MIT EINER BYPASS-VORRICHTUNG**

COMBINE HARVESTER WITH A BYPASS DEVICE

MOISSONNEUSE-BATTEUSE AVEC UN DISPOSITIF DE DÉRIVATION

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **08.12.2021 DE 102021132278**

(43) Veröffentlichungstag der Anmeldung:
**14.06.2023 Patentblatt 2023/24**

(73) Patentinhaber: CLAAS **Selbstfahrende Erntemaschinen GmbH**
**33428 Harsewinkel (DE)**

(72) Erfinder: **Brune, Markus**
**33428 Harsewinkel (DE)**

(74) Vertreter: **CLAAS Gruppe**
**Mühlenwinkel 1**
**33428 Harsewinkel (DE)**

(56) Entgegenhaltungen:
EP-A1- 2 401 906    DE-A1- 4 105 857
US-A- 5 616 851     US-A1- 2012 218 403
US-B1- 6 285 198    US-B1- 6 845 326

## Beschreibung

Die vorliegende Erfindung betrifft einen selbstfahrenden Mähdrescher und ein Verfahren zum Betrieb dieses Mähdreschers.

Selbstfahrende Mähdrescher weisen typischerweise einen Kornelevator zur Förderung eines Erntegutstroms von einer Förder- und Reinigungsvorrichtung des Mähdreschers zu einem Korntank des Mähdreschers auf. In der EP 0 908 086 A1 ist beispielsweise eine am Kornelevator angeordnete Bypass-Vorrichtung offenbart, durch die ein Erntegut-Teilstrom des durch den Kornelevator geführten Erntegutstroms geführt wird, wobei die Bypass-Vorrichtung einen Feuchtigkeitssensor zur Feuchtemessung aufweist. Die US 6 285 198 B1 offenbart einen Mähdrescher mit einer Bypass-Vorrichtung.

Der vorliegenden Erfindung liegt die Aufgabe zugrunde, eine verbesserte oder zumindest eine alternative Ausführungsform eines selbstfahrenden Mähdreschers mit einer Bypass-Vorrichtung anzugeben.

Diese Aufgabe wird erfindungsgemäß durch die Gegenstände der unabhängigen Ansprüche gelöst. Vorteilhafte Ausführungsformen sind Gegenstand der abhängigen Ansprüche.

Der erfindungsgemäße selbstfahrende Mähdrescher zur Aufnahme und Behandlung von Erntegut umfasst einen Kornelevator zur Förderung eines Erntegutstroms von einer Förder- und Reinigungsvorrichtung des Mähdreschers zu einem Korntank des Mähdreschers. Hierbei ist am Kornelevator eine Bypass-Vorrichtung derart angeordnet, dass ein Erntegut-Teilstrom des durch den Kornelevator geführten Erntegutstroms in die Bypass-Vorrichtung einströmt. Die Bypass-Vorrichtung ist zur Führung eines Erntegut-Teilstroms ausgebildet. Der Erntegut-Teilstrom kann vom Kornelevator in die Bypass-Vorrichtung einströmen und anschließend durchströmen, wobei der Erntegut-Teilstrom nach dem durchströmen der Bypass-Vorrichtung wieder zurück in den Kornelevator strömt.

Die vorliegende Erfindung beruht auf dem allgemeinen Gedanken, dass die Bypass-Vorrichtung eine optische Messvorrichtung zur Ermittlung von Ernteguteigenschaften, insbesondere zur Ermittlung von Inhaltsstoffen, eines Erntegut-Teilstromes aufweist und dass die Bypass-Vorrichtung wenigstens eine kapazitive Messvorrichtung zur Ermittlung von Ernteguteigenschaften des Erntegut-Teilstromes aufweist. Die optische Messvorrichtung kann zur Ermittlung von Inhaltsstoffen des eines Erntegut-Teilstromes ausgebildet sein. Die kapazitive Messvorrichtung kann zur Ermittlung von Inhaltsstoffen des eines Erntegut-Teilstromes ausgebildet sein.

Mit der optischen Messvorrichtung können beispielweise die Wassermasse, die Proteinmasse, die Kohlenhydratmasse und/oder die Fettmasse und/oder die Ölmasse des Erntegut-Teilstromes ermittelt werden. Hierfür kann die Messvorrichtung eine Lichtquelle aufweisen, die den Erntegut-Teilstrom beim Durchströmen der Messvorrichtung belichtet.

Ferner kann die Messvorrichtung mittels einem Sensor, insbesondere einem Nahinfrarotsensor und/oder einem Siliziumdetektor, massenproportionale Absorptionsspektren erfassen und anhand dieser Messdaten die Wassermasse, die Proteinmasse, die Kohlenhydratmasse und/oder die Fettmasse und/oder die Ölmasse des Erntegut-Teilstromes ermitteln. Hierdurch kann die Inhaltsstoffzusammensetzung und/oder Eigenschaften des durch den Kornelevator geführten Erntegutstroms anhand der massenproportionale Absorptionsspektren des Erntegut-Teilstroms ermittelt werden. Aus den durch die optische Messvorrichtung ermittelten Ernteguteigenschaften und/oder ermittelten Inhaltsstoffen kann beispielsweise ein Feuchtigkeitswert des Erntegut-Teilstroms ermittelt werden. Der Feuchtigkeitswert kann proportional, insbesondere linear proportional, zur Wassermasse des Erntegut-Teilstroms sein.

Eine kapazitive Messvorrichtung der Bypass-Vorrichtung kann mehrere, insbesondere zwei, voneinander beabstandete Elektroden aufweisen, wobei diese Elektroden in der Bypass-Vorrichtung angeordnet sind. Hierbei können zwei voneinander beabstandet angeordnete Elektroden einen Kondensator ausbilden, dessen elektrische Kapazität mittels der kapazitiven Messvorrichtung messbar ist. Da die kapazitive Messvorrichtung in der Bypass-Vorrichtung ausgebildet ist, ist die Querschnittsverteilung des geförderten Erntegut-Teilstroms im Vergleich zur Querschnittsverteilung des Erntegutes im Kornelevator konstant bzw. zeitlich konstant. Mit anderen Worten ausgedrückt, ist der Bereich der Bypass-Vorrichtung, in dem die Elektroden der kapazitiven Messvorrichtung angeordnet sind, derart ausgebildet, dass ein konstanter Füllungsgrad dieses Bereiches der Bypass-Vorrichtung mit dem Erntegut-Teilstrom erzielt wird. Eine solche konstante Querschnittsverteilung des geförderten Erntegut-Teilstroms und/oder ein konstanter Füllungsgrad ergibt sich beispielsweise, weil eine kleine Menge des Ernteguts, also der Erntegut-Teilstroms, unproblematisch den Bereich der Bypass-Vorrichtung, in dem die Elektroden angeordnet sind, vollständig ausfüllt, während der Erntegutstrom den Kornelevator in vielen Fällen nur teilweise und/oder zeitlich variierend ausfüllt. Mit anderen Worten ausgedrückt, ist der Bereich der Bypass-Vorrichtung, in dem die Elektroden der kapazitiven Messvorrichtung angeordnet sind, derart ausgebildet, insbesondere derart von der geometrischen Ausgestaltung ausgebildet, dass der Erntegut-Teilstrom diesen Bereich der Bypass-Vorrichtung vollständig ausfüllen kann. Somit kann ein konstantes, insbesondere volles und/oder vollständig ausgefülltes, Volumen des Erntegut-Teilstroms mit der kapazitiven Messvorrichtung vermessen werden.

Somit hängt die elektrische Kapazität des Kondensators der kapazitiven Messvorrichtung von der Querschnittsverteilung des geförderten Erntegut-Teilstroms und der Feuchtigkeit des geförderten Erntegut-Teilstroms und der Dichte des geförderten Erntegut-Teilstroms ab, jedoch ist die Querschnittsverteilung des geförderten Erntegut-Teilstroms in der Bypass-Vorrichtung eine konstante, die zeitlich nicht variiert. Daher variiert die elektrische Kapazität des Kondensators der kapazitiven Messvorrichtung lediglich in Abhängigkeit der Feuchtigkeit des geförderten Erntegut-Teilstroms und der Dichte des geförderten Erntegut-Teilstroms.

Der Mähdrescher kann beispielsweise eine Auswertungseinheit aufweisen, die die Messdaten der optischen Messvorrichtung und Messdaten der kapazitiven Messvorrichtung erhält und/oder abruft. Die Auswertungseinheit kann dazu ausgebildet sein, aus den Messdaten der optischen Messvorrichtung einen Feuchtigkeitswert des Erntegut-Teilstroms der Bypass-Vorrichtung zu ermitteln und mit diesem Feuchtigkeitswert und den Messdaten der kapazitiven Messvorrichtung, also der elektrischen Kapazität, ein Hektorlitergewicht des Erntegut-Teilstroms der Bypass-Vorrichtung zu ermittelt. Das Hektorlitergewicht kann neben der Feuchtigkeit als weiter Qualitätsparameter des Ernteguts eingestuft werden, sodass eine bessere Klassifizierung ermöglicht wird. Die Auswertungseinheit kann derart ausgebildet sein, dass die Ermittlung des Hektorlitergewichtes des Erntegut-Teilstroms erst nach einer bestimmten festgesetzten Zeitspanne nach einem Start bzw. Beginn einer landwirtschaftlichen Arbeit des Mähdreschers erfolgt, um einen ausreichende Befüllung der Bypass-Vorrichtung mit dem Erntegut-Teilstrom zu sichern.

Bei einer vorteilhaften Weiterbildung der erfindungsgemäßen Lösung ist vorgesehen, dass die Bypass-Vorrichtung einen Sammelbehälter zum Sammeln des Erntegut-Teilstroms aufweist, wobei die kapazitive Messvorrichtung im und/oder am Sammelbehälter angeordnet ist. Unter "Sammeln" ist hier zu verstehen, dass der Erntegut-Teilstrom einen kontinuierlichen Durchlauf durch den Sammelbehälter aufweist, wobei der Erntegut-Teilstrom in den Sammelbehälter einströmt, den Sammelbehälter durchströmt und anschließend aus dem Sammelbehälter ausströmt, wobei der Sammelbehälter derart ausgebildet sein kann, dass dass eine Einströmgeschwindigkeit und/oder Einströmmenge pro Zeiteinheit des Erntegut-Teilstrom in den Sammelbehälter größer ist als eine Ausströmgeschwindigkeit und/oder Ausströmmenge pro Zeiteinheit des Erntegut-Teilstrom aus dem Sammelbehälter. Mit anderen Worten ausgedrückt, bildet der Sammelbehälter einen Vorratsspeicher, insbesondere einen vollständig mit Erntegut-Teilstrom gefüllten Vorratsspeicher, mit einem kontinuierlichen Durchlauf des Erntegut-Teilstroms aus.

Bei einer vorteilhaften Weiterbildung der erfindungsgemäßen Lösung ist vorgesehen, dass der Sammelbehälter wenigstens eine Füllstandsensoreinheit zur Erfassung des Füllstandes des Erntegut-Teilstroms im Sammelbehälter aufweist. Die Füllstandsensoreinheit kann den Füllstand des Erntegut-Teilstroms im Sammelbehälter an die Auswertungseinheit des Mähdreschers übermitteln, wobei die Auswertungseinheit die Ermittlung des Hektorlitergewichtes lediglich ausführt, wenn aus dem Füllstand des Erntegut-Teilstroms folgt, dass eine konstante Querschnittsverteilung des geförderten Erntegut-Teilstroms und/oder ein konstanter Füllungsgrad vorliegt.

Bei einer vorteilhaften Weiterbildung der erfindungsgemäßen Lösung ist vorgesehen, dass der Mähdrescher eine Ertragsmessvorrichtung zur Ertragsmessung des Erntegutstroms aufweist, wobei die Ertragsmessvorrichtung im und/oder am Kornelevator angeordnet ist und von der Bypass-Vorrichtung beabstandet angeordnet ist. Die Ertragsmessvorrichtung kann separat bezüglich der Bypass-Vorrichtung ausgebildet sein.

Bei einer vorteilhaften Weiterbildung der erfindungsgemäßen Lösung ist vorgesehen, dass die Ertragsmessvorrichtung zwischen der Bypass-Vorrichtung und dem Korntank ausgebildet ist. Mit anderen Worten ausgedrückt, ist die Ertragsmessvorrichtung im und/oder am Kornelevator angeordnet, jedoch bezüglich einer Bewegungsrichtung des Erntegutstroms von der Förder- und Reinigungsvorrichtung zum Korntank hinter der Bypass-Vorrichtung positioniert ist.

Bei einer vorteilhaften Weiterbildung der erfindungsgemäßen Lösung ist vorgesehen, dass die Ertragsmessvorrichtung eine optische Ertragsmessvorrichtung ist, oder dass die Ertragsmessvorrichtung eine kraftbasierte Ertragsmessvorrichtung ist, oder dass die Ertragsmessvorrichtung eine kapazitive Messvorrichtung ist.

Die optische Ertragsmessvorrichtung kann eine Lichtschranke zur Ertragsmessung sein. Es kann hierbei vorgesehen sein, dass in die Ertragsmessung der optischen Ertragsmessvorrichtung das Hektorlitergewicht des Erntegut-Teilstroms der Bypass-Vorrichtung einbezogen wird, um das Ergebnis der Ertragsmessung zu verbessern und/oder zu optimieren.

Die kraftbasierte Ertragsmessvorrichtung kann eine Prallplatte, insbesondere zur Massenbestimmung, sein, wobei das Hektorlitergewicht des Erntegut-Teilstroms, insbesondere umgekehrt, eingesetzt werden kann, um eine Korntankfüllstandsanzeige zu verbessern oder zu optimieren.

Die Ertragsmessvorrichtung, die als kapazitive Messvorrichtung ausgebildet ist, ist eine weitere kapazitive Messvorrichtung im Vergleich zur kapazitiven Messvorrichtung der Bypass-Vorrichtung. Im Gegensatz zur Situation der kapazitiven Messvorrichtung der Bypass-Vorrichtung ändert sich, insbesondere zeitlich, bei der Ertragsmessvorrichtung die Querschnittsverteilung des geförderten Erntegutstroms bzw. der Füllungsgrad des Kornelevators bzw. das Volumen des durch den Kornelevator geförderten Erntegutstroms. Die Auswertungseinheit des Mähdreschers kann derart ausgebildet sein, dass aus den Messdaten der optischen Messvorrichtung ein Feuchtigkeitswert des Erntegut-Teilstroms der Bypass-Vorrichtung ermittelt wird und mit diesem Feuchtigkeitswert und aus den Messdaten der kapazitiven Messvorrichtung der Bypass-Vorrichtung ein Hektorlitergewicht des Erntegut-Teilstroms der Bypass-Vorrichtung ermittelt wird, wobei die Auswertungseinheit aus Messdaten der kapazitiven Ertragsmessvorrichtung, also insbesondere der elektrischen Kapazität, und aus dem Feuchtigkeitswert der Bypass-Vorrichtung und aus dem Hektorlitergewicht der Bypass-Vorrichtung den Ertrag, insbesondere die geförderte Masse, des Erntegutstroms ermittelt.

Bei einer vorteilhaften Weiterbildung der erfindungsgemäßen Lösung ist vorgesehen, dass die Bypass-Vorrichtung einen Schneckenförderer zur Förderung des Erntegut-Teilstroms zur optischen Messvorrichtung aufweist. Die Bypass-Vorrichtung kann eine Zuführungsöffnung aufweisen, durch die der Erntegut-Teilstroms ausgehend von dem Kornelevator in die Bypass-Vorrichtung einströmt. Hierbei kann der Erntegut-Teilstrom in den Schneckenförderer einströmen. Hierfür kann eine Zuführungsöffnung oberhalb eines Teiles des Schneckenförderers angeordnet sein, sodass der Erntegut-Teilstrom aufgrund der Gravitation im Wesentlichen entlang der Schwerkraftrichtung strömt und über eine Einströmungsöffnung in den Schneckenförderer einströmt. Der Sammelbehälter zum Sammeln des Erntegut-Teilstroms kann wenigstens teilweise zwischen der Zuführungsöffnung und dem Schneckenförderer angeordnet sein, wobei der Erntegut-Teilstrom über die Zuführungsöffnung strömt, den Sammelbehälter durchströmt und anschließend über die Einströmungsöffnung in den Schneckenförderer einströmt.

Der Schneckenförderer fördert den eingeströmten Erntegut-Teilstrom zur optischen Messvorrichtung. Hierbei kann der Schneckenförderer derart ausgebildet und/oder derart in der Bypass-Vorrichtung ausgerichtet sein, dass der durch die durch den Schneckenförderer geförderte Erntegut-Teilstrom über eine Ausströmungsöffnung verlässt und in Richtung der optischen Messvorrichtung strömt. Hierbei kann es vorgesehen sein, dass die Einströmungsöffnung bezüglich der Schwerkraftrichtung unterhalb der Ausströmungsöffnung angeordnet ist. Mit anderen Worten ausgedrückt, wird der im Schneckenförderer Erntegut-Teilstrom hochgefördert. Durch den Schneckenförderer kann eine kontinuierliche und gleichmäßige Zuführung des Erntegut-Teilstroms zur optischen Messvorrichtung gesichert werden, sodass die optische Messvorrichtung optimale Messungen ausführen kann. Die Förderung des eingeströmten Erntegut-Teilstroms innerhalb des Schneckenförderer kann entlang einer Hauptförderrichtung erfolgen.

Der Schneckenförderer kann eine Zwischenöffnung aufweisen, die bezüglich der Hauptförderrichtung stromab der Ausströmungsöffnung ausgebildet ist, wobei über diese Zwischenöffnung ein Teil des Erntegut-Teilstroms, der nicht in die Ausströmungsöffnung eingeströmt ist, zurück in den Kornelevator strömen kann.

Der Schneckenförderer kann einen Antrieb, insbesondere einen hydraulischen und/oder elektrischen und/oder mechanischen Antrieb, aufweisen.

Bei einer vorteilhaften Weiterbildung der erfindungsgemäßen Lösung ist vorgesehen, dass die Bypass-Vorrichtung eine Zuführungsöffnung aufweist, durch die der Erntegut-Teilstrom aus dem Kornelevator in die Bypass-Vorrichtung einströmen kann.

Alternativ oder zusätzlich ist vorgesehen, dass die Bypass-Vorrichtung eine Ausführungsöffnung aufweist, durch die der Erntegut-Teilstrom nach dem Durchströmen der optischen Messvorrichtung in den Kornelevator einströmen kann.

Alternativ oder zusätzlich ist vorgesehen, dass die Bypass-Vorrichtung eine Zwischenöffnung aufweist, durch die der Erntegut-Teilstrom in den Kornelevator einströmen kann.

Bei einer vorteilhaften Weiterbildung der erfindungsgemäßen Lösung ist vorgesehen, dass zwischen der Zuführungsöffnung und dem Schneckenförderer der Sammelbehälter zum Sammeln des Erntegut-Teilstroms ausgebildet ist. Der Erntegut-Teilstrom strömt über die Zuführungsöffnung in den Sammelbehälter ein, durchströmt den Sammelbehälter und strömt anschließend aus dem Sammelbehälter in den Schneckenförderer ein.

Bei einer vorteilhaften Weiterbildung der erfindungsgemäßen Lösung ist vorgesehen, dass der Sammelbehälter zwischen der Zuführungsöffnung und dem Schneckenförderer wenigstens abschnittsweise eine Kanalverjüngung aufweist. Der Sammelbehälter weist somit in Richtung des Schneckenförderers eine Verjüngung, insbesondere eine Querschnittsverjüngung, auf. Durch den Sammelbehälter kann die Menge des Erntegut-Teilstroms mit reduzierten Schwankungen an Schneckenförderer und folglich mit reduzierten Schwankungen an die optische Messvorrichtung geführt werden. Hierdurch kann eine vollständige Füllung und/oder zeitlich konstante Füllung des Sammelbehälters mit dem Erntegut-Teilstrom unterstützt und/oder optimiert werden.

Bei einer vorteilhaften Weiterbildung der erfindungsgemäßen Lösung ist vorgesehen, dass die kapazitive Messvorrichtung der Bypass-Vorrichtung in und/oder an der Kanalverjüngung des Sammelbehälters angeordnet ist. Hierdurch kann eine vollständige Füllung und/oder zeitlich konstante Füllung des Sammelbehälters mit dem Erntegut-Teilstrom bezüglich der kapazitiven Messvorrichtung unterstützt und/oder optimiert werden.

Bei einer vorteilhaften Weiterbildung der erfindungsgemäßen Lösung ist vorgesehen, dass die Bypass-Vorrichtung ein Zuführrohr zur Führung des Erntegut-Teilstroms vom Schneckenförderer zur optischen Messvorrichtung aufweist, wobei die optische Messvorrichtung ein Rohr, insbesondere ein transparentes Rohr und/oder ein optisch transparentes Rohr, und zur Führung des Teilstroms des Erntegutstroms für die Ermittlung von Ernteguteigenschaften des Erntegut-Teilstromes aufweist. Das Rohr kann ein Glasrohr, insbesondere ein transparentes Glasrohr und/oder ein optisch transparentes Glasrohr, und/oder ein Holzrohr, insbesondere ein transparentes Holzrohr und/oder ein optisch transparentes Holzrohr, sein. Glas kann ein nichtkristalliner, insbesondere ein transparenter amorpher Feststoff, sein. Das Zuführrohr kann separat bezüglich dem Schneckenförderer und/oder separat bezüglich der optischen Messvorrichtung ausgebildet sein. Das Zuführrohr kann strömungstechnisch derart zwischen dem Schneckenförderer und der optischen Messvorrichtung angeordnet sein, dass der Erntegut-Teilstrom vom Schneckenförderer in das Zuführrohr einströmt, das Zuführrohr durchströmt und anschließend in die optische Messvorrichtung einströmt. Der Bereich des Schneckenförderers, aus dem der Erntegut-Teilstrom austritt, kann oberhalb des Zuführrohrs angeordnet sein, sodass der Erntegut-Teilstrom neben der Geschwindigkeit des Schneckenförderers zusätzlich durch die Gravitation im Wesentlichen entlang der Schwerkraftrichtung strömt.

Das Rohr der optischen Messvorrichtung kann im Wesentlichen transparent für die Lichtstrahlung der Lichtquelle der optischen Messvorrichtung und/oder im Wesentlichen transparent für die Strahlung sein, die von dem Sensor der optischen Messvorrichtung erfasst und/oder gemessen wird.

Bei einer vorteilhaften Weiterbildung der erfindungsgemäßen Lösung ist vorgesehen, dass die Bypass-Vorrichtung zur Reinigung des Rohres der optischen Messvorrichtung und zur Sicherstellung eines Leerzustandes des Rohres der optischen Messvorrichtung ausgebildet ist. Es kann vorgesehen sein, dass die Bypass-Vorrichtung vor der Sicherstellung des Leerzustandes des Rohres eine Reinigung des Rohres durchgeführt.

Die optische Messvorrichtung kann derart ausgebildet sein, dass sie erkennen und/oder ermitteln, insbesondere sensorisch erkennen und/oder ermitteln, kann, dass eine Reinigung oder Referenzierung der optischen Messvorrichtung erforderlich ist. Hierfür kann der Sensor der optischen Messvorrichtung zwei unterschiedliche Referenzen eigenständig ermitteln, ohne das Weißnormales in die optische Messvorrichtung eingebracht wird. Diese zwei unterschiedlichen Referenzen sind eine "Dunkelreferenz" und eine "Weißreferenz". Bei der "Dunkelreferenz" ist die Lichtquelle der optischen Messvorrichtung ausgeschaltet und es ist kein Erntegut in der optischen Messvorrichtung. Bei der "Weißreferenz" ist die Lichtquelle der optischen Messvorrichtung eingeschaltet und es ist kein Erntegut in der optischen Messvorrichtung. Basierend auf diesen zwei Referenzen kann eine durch Alterung hervorgerufene veränderter Charakteristik der Lichtquelle eliminiert bzw. herausberechnet werden, oder auch ein leichtes Verschmutzen eines Glaskolbens in der optischen Messvorrichtung kann eliminiert bzw. herausberechnet werden. Daher kann die optische Messvorrichtung bei einer Alterung der Lichtquelle und/oder einer leichten Verschmutzen des Glaskolbens weiterhin mit ausreichender Sicherheit eingesetzt und/oder genutzt werden. Für eine solche Referenzierung der optischen Messvorrichtung sichert die Bypass-Vorrichtung den Leerzustand des Rohres. Für eine ausreichende, insbesondere gute, Referenzierung kann in regelmäßigen Abständen eine Referenzmessung ausgeführt werden.

Ferner kann es in bestimmten Erntebedingungen erforderlich sein, das Rohr zu reinigen. Dies kann mit einem Zylinder erfolgen, dessen Kolbenstange durch das Rohr geschoben wird. Hierfür kann an der Kolbenstange ein Reinigungselement angeordnet sein. Insbesondere kann am Ende der Kolbenstange das Reinigungselement angeordnet sein. Beispielsweise kann das Reinigungselement als bürstenartiger Aufsatz ausgebildet sein. Ein bürstenartiger Aufsatz kann gemäß einem Besen und/oder einer Drahtbürste und/oder einem "Pfeiffenputzer" ausgebildet sein.

Die optische Messvorrichtung kann derart ausgebildet sein, dass sie erkennt, dass eine Blockade des Rohres besteht, die nicht von der optischen Messvorrichtung entfernt werden kann, sondern manuell entfernt werden muss. In einem solchen Fall kann die optische Messvorrichtung beispielweise den Bediener des Mähdreschers bezüglich der Blockade informieren und/oder den Bediener des Mähdreschers dazu auffordern, die Blockade des Rohres manuell zu entfernen.

Um den Leerzustand des Rohres zu sichern, kann der Schneckenförderer ein Rückwärtsdrehen seiner Schnecke, insbesondere für einen kurzen Zeitraum, vollziehen, um den Einlauf des Erntegut-Teilstroms in das Rohr zu blockieren.

Um den Leerzustand des Rohres zu sichern, kann die Bypass-Vorrichtung einen ersten Zylinder mit einer beweglichen Kolbenstange und zur Reinigung des Rohres einen zweiten Zylinder mit einer beweglichen Kolbenstange aufweisen, wobei der erste Zylinder separat bezüglich des zweiten Zylinders ausgebildet sein kann.

Die Bypass-Vorrichtung kann einen zusätzlichen Probeneinlass und einen zusätzlichen Probenauslass aufweisen, um eine Getreideprobe zu vermessen, die nicht mit dem Mähdrescher geerntet wurde. Hierbei kann es vorgesehen sein, dass die Bypass-Vorrichtung den Leerzustand des Rohres der optischen Messvorrichtung sicherstellt, sodass kein vom Mähdrescher geerntetes Erntegut-Teilstrom in das Rohr einströmen kann, jedoch die Getreideprobe über den zusätzlichen Probeneinlass in das Rohr eingeführt werden kann. Es kann vorgesehen sein, dass die Bypass-Vorrichtung vor der Sicherstellung des Leerzustandes des Rohres eine Reinigung des Rohres durchgeführt. Hierfür kann der zusätzliche Probeneinlass oberhalb des Rohres der optischen Messvorrichtung angeordnet sein, sodass die Getreideprobe aufgrund der Gravitation im Wesentlichen entlang der Schwerkraftrichtung strömt und das Rohr durchströmt. Anschließend kann die Getreideprobe über den zusätzlichen Probenauslass aus der optischen Messvorrichtung ausströmen, wobei der zusätzliche Probenauslass unterhalb des Rohres der optischen Messvorrichtung angeordnet ist, sodass die Getreideprobe aufgrund der Gravitation im Wesentlichen entlang der Schwerkraftrichtung strömt und das Rohr verlässt. Da hierbei keine aktive Gutförderung erforderlich ist, ist es beispielsweise nicht nötig, dass der Antrieb und/oder der Schneckenförderer des Mähdreschers aktiv ist. Dieses System kann dazu genutzt werden, eine Probe bzw. Getreideprobe mit bekannten Inhaltsstoffen zu vermessen, um so eine Offsetkorrektur des Sensors der optischen Messvorrichtung durchzuführen.

Durch eine Bypass-Vorrichtung, die zur Reinigung des Rohres der optischen Messvorrichtung und zur Sicherstellung eines Leerzustandes des Rohres der optischen Messvorrichtung ausgebildet ist, lässt sich die Einsatzzeit der optischen Messvorrichtung maximieren, sodass beispielsweise Wartungskosten und/oder Ersatzteilkosten reduziert werden können.

Bei einer vorteilhaften Weiterbildung der erfindungsgemäßen Lösung ist vorgesehen, dass die Bypass-Vorrichtung eine Zylindervorrichtung mit einer beweglichen Kolbenstange zur Reinigung des Rohres der optischen Messvorrichtung und zur Sicherstellung eines Leerzustandes des Rohres der optischen Messvorrichtung aufweist. Mit anderer Worten ausgedrückt, weist die Bypass-Vorrichtung lediglich bzw. genau eine Zylindervorrichtung, die zur Reinigung des Rohres und zur Sicherstellung eines Leerzustandes des Rohres ausgebildet ist. Die Bypass-Vorrichtung, insbesondere die Anordnung und/oder Ausrichtung der optischen Messvorrichtung, insbesondere des Rohres, und des Schneckenförderers und der einen Zylindervorrichtung, kann derart ausgebildet sein, dass die eine Zylindervorrichtung zur Reinigung des Rohres der optischen Messvorrichtung und zur Sicherstellung eines Leerzustandes des Rohres der optischen Messvorrichtung ausgebildet ist. Hierbei versteht es sich von selbst, dass eine Reinigung des Rohres der optischen Messvorrichtung und die Sicherstellung eines Leerzustandes des Rohres nicht zeitgleich erfolgt, sondern beispielsweise erst eine Reinigung des Rohres und anschließend eine Sicherstellung eines Leerzustandes des Rohres erfolgt. Es kann auch vorgesehen sein, dass die eine Zylindervorrichtung lediglich eine Sicherstellung eines Leerzustandes des Rohres oder lediglich eine Reinigung des Rohres durchführt.

Da lediglich eine Zylindervorrichtung und keine weitere erforderlich ist, können die Herstellungskosten des Bypass-Vorrichtung gesenkt, der erforderliche Einbauraum für die Bypass-Vorrichtung reduziert und zusätzlich das Gesamtgewicht der Bypass-Vorrichtung optimiert werden.

Bei einer vorteilhaften Weiterbildung der erfindungsgemäßen Lösung ist vorgesehen, dass die Kolbenstange, insbesondere eine Stirnfläche der Kolbenstange, wenigstens eine Öffnungsposition einnehmen kann, in der der Schneckenförderer, das Zuführrohr und das Rohr derart zur Führung des Erntegut-Teilstroms miteinander verbunden sind, dass ein vom Schneckenförderer geförderter Erntegut-Teilstrom im Wesentlichen in das Zuführrohr einströmt und anschließend das Rohr durchströmt. Mit anderen Worten ausgedrückt, kann die Kolbenstange eine oder mehrere Öffnungspositionen einnehmen, in denen die Strömung des Erntegut-Teilstroms nicht durch die Kolbenstange beeinflusst bzw. geschwächt wird. In einem solchen Fall ist die Kolbenstange außerhalb eines Strömungsweges, der vom Schneckenförderer zum Zuführrohr führt, angeordnet.

Alternativ oder zusätzlich ist vorgesehen, dass die Kolbenstange, insbesondere die Stirnfläche der Kolbenstange, wenigstens eine Zwischenposition einnehmen kann, in der wenigstens ein Teil der Kolbenstange unterdrückt, dass der Erntegut-Teilstrom von dem Schneckenförderer zum Rohr strömen kann, sodass ein vom Schneckenförderer ausgehender Erntegut-Teilstrom nicht in das Rohr der optischen Messvorrichtung einströmt. Mit anderen Worten ausgedrückt, kann die Kolbenstange eine oder mehrere Zwischenpositionen einnehmen, in denen der Erntegut-Teilstrom ausgehend von dem Schneckenförderer nicht in das Rohr der optischen Messvorrichtung einströmen kann. Daher dichtet die Kolbenstange, insbesondere ein Reinigungselement, das Rohr gegenüber dem Schneckenförderer ab. Die Zwischenposition der Kolbenstange, insbesondere der Stirnfläche der Kolbenstange, kann eine Position innerhalb des Zuführrohrs sein.

Hierbei kann es vorgesehen sein, dass die Kolbenstange wenigstens teilweise den Schneckenförderer durchsetzt, sodass bei einer solchen Ausgestaltung der Schneckenförderer die Förderung stoppt und die beispielsweise die Lage der Schneckenwindungen derart ausgerichtet ist, dass die Kolbenstange reibungsfrei zwischen den Schneckenwindungen des Schneckenförderers bewegt werden kann.

Hierbei kann es vorgesehen sein, dass die Kolbenstange nicht den Schneckenförderer durchsetzt, sodass bei jeder Zwischenposition der Kolbenstange der Schneckenförderer weiter fördern kann, wobei jedoch der Erntegut-Teilstrom nicht in das Rohr einströmen kann. In diesem Fall kann der Erntegut-Teilstrom beispielsweise über die Zwischenöffnung zurück in den Kornelevator strömen kann. Jedoch kann auch in diesem Fall vorgesehen sein, dass der Schneckenförderer die Förderung stoppt, obwohl die Kolbenstange den grundlegenden Betrieb des Schneckenförderers nicht negativ beeinflusst.

Alternativ oder zusätzlich ist vorgesehen, dass die Kolbenstange, insbesondere die Stirnfläche der Kolbenstange, wenigstens eine Endposition einnehmen kann, in der wenigstens ein Teil der Kolbenstange in einer Endöffnung des Rohres der optischen Messvorrichtung angeordnet ist. Hierdurch kann eine Reinigung und/oder Entleerung des Rohres ausgeführt werden. Die Endöffnung des Rohres kann die Öffnung des Rohres sein, aus der der Erntegut-Teilstrom ausströmt.

Bei einer vorteilhaften Weiterbildung der erfindungsgemäßen Lösung ist vorgesehen, dass die Kolbenstange ein Reinigungselement, insbesondere ein bürstenartiges Reinigungselement, aufweist. Insbesondere kann am Ende der Kolbenstange das Reinigungselement angeordnet sein. Beispielsweise kann das Reinigungselement als bürstenartiger Aufsatz ausgebildet sein. Ein bürstenartiger Aufsatz kann gemäß einem Besen und/oder einer Drahtbürste und/oder einem "Pfeiffenputzer" und/oder einem Schwamm ausgebildet sein. Das Reinigungselement kann ausgehend von der Stirnfläche der Kolbenstange ausgebildet sein. Mit einem Reinigungselement kann eine Reinigung des Rohrs optimal erfolgen, sodass die Lebensdauer der optischen Messvorrichtung erhöht wird und/oder die Messgenauigkeit optimiert wird.

Bei einer vorteilhaften Weiterbildung der erfindungsgemäßen Lösung ist vorgesehen, dass die Bypass-Vorrichtung eine Wegmessvorrichtung zur Ermittlung der Position der Kolbenstange, insbesondere der Stirnfläche und/oder des Reinigungselementes, aufweist, um eine genaue Positionierung der Kolbenstange, insbesondere der Stirnfläche und/oder des Reinigungselementes, zu ermöglichen. Insbesondere wird die Wegmessvorrichtung eingesetzt, um die Kolbenstange, insbesondere die Stirnfläche und/oder das Reinigungselementes, gezielt in eine Zwischenposition zu führen, sodass vom Schneckenförderer geförderter Erntegut-Teilstrom nicht in das Rohr der optischen Messvorrichtung einströmt.

Alternativ oder zusätzlich ist vorgesehen, dass die Bypass-Vorrichtung eine Vorrichtung zur zeitgesteuerten Positionsänderung der Kolbenstange, insbesondere der Stirnfläche und/oder des Reinigungselementes, aufweist, um eine genaue Positionierung der Kolbenstange, insbesondere der Stirnfläche und/oder des Reinigungselementes, zu ermöglichen. Insbesondere wird die zeitgesteuerte Positionsänderung eingesetzt, um die Kolbenstange, insbesondere die Stirnfläche und/oder das Reinigungselementes, gezielt in eine Zwischenposition zu führen, sodass vom Schneckenförderer geförderter Erntegut-Teilstrom nicht in das Rohr der optischen Messvorrichtung einströmt.

Alternativ oder zusätzlich ist vorgesehen, dass die Bypass-Vorrichtung im Zuführrohr einen Sensor und/oder einen Schalter zur Erfassung des Vorhandenseins der Kolbenstange, insbesondere der Stirnfläche und/oder des Reinigungselementes, aufweist, um eine genaue Positionierung der Kolbenstange, insbesondere der Stirnfläche und/oder des Reinigungselementes, zu ermöglichen. Der Sensor und/oder der Schalter können im Zuführrohr positioniert sein. Der Schalter kann ein Näherungsschalter sein. Der Sensor kann ein Induktivitätssensor sein. Beispielsweise kann sich die Kolbenstange in Richtung der optischen Messvorrichtung bewegen, wobei diese Bewegung gestoppt wird, wenn der Sensor und/oder der Schalter die Kolbenstange detektiert. Basierend auf dieser Detektion wird die Bewegung der Kolbenstange gestoppt.

Bei einer vorteilhaften Weiterbildung der erfindungsgemäßen Lösung ist vorgesehen, dass die optische Messvorrichtung dazu ausgebildet ist, die Position der Kolbenstange, insbesondere der Stirnfläche und/oder des Reinigungselementes, innerhalb des Rohrs zu ermitteln, um eine genaue Positionierung der Kolbenstange, insbesondere der Stirnfläche und/oder des Reinigungselementes, zu ermöglichen. Die optische Messvorrichtung kann auf Grund des durch die Kolbenstange, insbesondere die Stirnfläche und/oder das Reinigungselemente, generierten Absorptionsspektrum erkennen, ob sich die Kolbenstange, insbesondere die Stirnfläche und/oder das Reinigungselemente, im Rohr befindet. Nach dieser Erkennung kann die Kolbenstange so lange aus dem Rohr herausgefahren werden, bis die Kolbenstange, insbesondere die Stirnfläche und/oder das Reinigungselement, nicht mehr im Rohr ist. Dass die Kolbenstange, insbesondere der Stirnfläche und/oder des Reinigungselementes, nicht mehr im Rohr ist, erkennt die optische Messvorrichtung wieder am generierten Absorptionsspektrum und stoppt dann, insbesondere unmittelbar und/oder sofort, die Ausfahrbewegung der Kolbenstange. Aufgrund der Anordnung des Rohrs, des Zuführrohrs und des Schneckenförderers bleibt die Kolbenstange, insbesondere die Stirnfläche und/oder das Reinigungselement, im Zuführrohr stehen, sodass der Erntegut-Teilstrom nicht von dem Schneckenförderer in das Rohr strömen kann. Mit anderen Worten ausgedrückt, dichtet die Kolbenstange, insbesondere die Stirnfläche und/oder das Reinigungselement, das Rohr gegenüber dem Schneckenförderer ab.

Bei einer vorteilhaften Weiterbildung der erfindungsgemäßen Lösung ist vorgesehen, dass die optische Messvorrichtung dazu ausgebildet ist, die Position der Kolbenstange, insbesondere der Stirnfläche und/oder des Reinigungselementes, mittels wenigstens einem Absorptionsspektrum zu ermitteln. Hierdurch kann die Position der Kolbenstange, insbesondere der Stirnfläche und/oder des Reinigungselementes, innerhalb des optischen Messvorrichtung, insbesondere innerhalb des Rohrs, ermittelt werden.

Bei einer vorteilhaften Weiterbildung der erfindungsgemäßen Lösung ist vorgesehen, dass die Kolbenstange, insbesondere die Stirnfläche und/oder das Reinigungselement, wenigstens abschnittsweise eine geometrische Variation aufweist. Hierdurch ist die Kolbenstange derart gestaltet, dass einem bestimmten Zylinderhub ein bestimmtes Absorptionsverhalten zugeordnet werden kann. Eine geometrische Variation kann eine geometrische Änderung des Materials sein. Beispielsweise kann neben einem kreisförmigen Querschnitt der Kolbenstange ein dreieckiger Querschnitt der Kolbenstange ausgebildet sein.

Alternativ oder zusätzlich ist vorgesehen, dass die Kolbenstange, insbesondere die Stirnfläche und/oder das Reinigungselement, wenigstens abschnittsweise aus unterschiedlichen Materialien ausgebildet ist. Unterschiedliche Materialen weisen unterschiedliche Absorptionsverhalten auf. Dies kann außerdem zur zusätzlichen, präziseren Mehrpunktkalibrabtion des Sensors genutzt werden.

Ferner betrifft die Erfindung ein Verfahren zum Betrieb eines erfindungsgemäßen Mähdreschers, wobei ein Feuchtigkeitswert des Erntegut-Teilstroms der Bypass-Vorrichtung mittels der optischen Messvorrichtung der Bypass-Vorrichtung ermittelt wird, und dass eine elektrische Kapazität der kapazitiven Messvorrichtung der Bypass-Vorrichtung ermittelt wird, und dass aus dem ermittelten Feuchtigkeitswert und aus der ermittelten elektrischen Kapazität ein Hektorlitergewicht des Erntegut-Teilstroms der Bypass-Vorrichtung ermittelt wird. Zusätzlich kann auch wenigstens ein weiterer Parameter, wie z.B. eine Tausendkornmasse, in die Ermittlung des Hektorlitergewichtes einfließen.

Eine Auswertungseinheit des Mähdreschers kann die Messdaten der optischen Messvorrichtung und Messdaten der kapazitiven Messvorrichtung erhalten und/oder abrufen. Die Auswertungseinheit kann aus den Messdaten der optischen Messvorrichtung einen Feuchtigkeitswert des Erntegut-Teilstroms der Bypass-Vorrichtung ermitteln und mit diesem Feuchtigkeitswert und den Messdaten der kapazitiven Messvorrichtung, also der elektrischen Kapazität, ein Hektorlitergewicht des Erntegut-Teilstroms der Bypass-Vorrichtung ermitteln bzw. berechnen.

Die Auswertungseinheit des Mähdreschers kann das ermittelte Hektorlitergewicht des Erntegut-Teilstroms beispielsweise datentechnisch an eine Recheneinheit übermitteln. Die Recheneinheit kann diese Informationen beispielsweise einen Führer des Mähdreschers über einen Bildschirm anzeigen.

Ferner kann die Auswertungseinheit, wie es schon oben beschrieben ist, den Feuchtigkeitswert des Erntegut-Teilstroms und/oder das ermittelte Hektorlitergewicht des Erntegut-Teilstroms zusammen mit Messwerten einer Ertragsmessvorrichtung einsetzen, um die Ertragsmessung der Ertragsmessvorrichtung zu verbessern und/oder zu ermöglichen.

Bei einer vorteilhaften Weiterbildung der erfindungsgemäßen Lösung ist vorgesehen, dass die Ermittlung des Feuchtigkeitswertes des Erntegut-Teilstroms und/oder die Ermittlung der elektrischen Kapazität der kapazitiven Messvorrichtung während eines Betriebes des Mähdreschers kontinuierlich ausgeführt wird. Unter kontinuierlich kann zu verstehen sein, dass die Ermittlung des Feuchtigkeitswertes des Erntegut-Teilstroms und/oder die Ermittlung der elektrischen Kapazität der kapazitiven Messvorrichtung während eines Betriebes des Mähdreschers in gleichmäßigen Zeitabständen und/oder automatisiert erfolgt.

Bei einer vorteilhaften Weiterbildung der erfindungsgemäßen Lösung ist vorgesehen, dass der ermittelte Feuchtigkeitswert und die ermittelte elektrische Kapazität zur Ermittlung des Hektorlitergewicht des Erntegut-Teilstroms jeweils linear einfließen, und/oder dass der ermittelte Feuchtigkeitswert und die ermittelte elektrische Kapazität zur Ermittlung des Hektorlitergewicht des Erntegut-Teilstroms jeweils quadratisch einfließen, und/oder dass zur Ermittlung des Hektorlitergewichts des Erntegut-Teilstroms neben dem ermittelten Feuchtigkeitswert und der ermittelten elektrischen Kapazität mehrere erntegutabhängige Vorfaktoren einfließen.

Beispielhaft wird die folgende Formel zur Berechnung des Hektorlitergewichtes angeführt

$$HLG = a_1 * F + a_2 * K + a_3 * F^2 + a_4 * K^2 + C$$

wobei "F" der Feuchtigkeitswert des Erntegut-Teilstroms der Bypass-Vorrichtung ist, wobei "K" die elektrische Kapazität der kapazitiven Messvorrichtung der Bypass-Vorrichtung ist, wobei die Vorfaktoren "$a_1, a_2, a_3, a_4$" und die Konstante "C" von der Art des Erntegutes abhängig sind. Die Auswertungseinheit des Mähdreschers kann anhand dieser Formel das Hektorlitergewicht aus den Messwerten der Messvorrichtungen der Bypass-Vorrichtung ermitteln. Es kann vorgesehen sein, dass diese Vorfaktoren und die Konstante für unterschiedliche Erntegutarten, beispielsweise für Weizen, Gerste, usw., in der Auswertungseinheit des Mähdreschers hinterlegt sind.

Ferner kann folgende Formel zur Berechnung des Hektorlitergewichtes eingesetzt werden

$$HLG = a_1 * F + a_2 * K + a_3 * F^2 + a_4 * K^2 + C + a_5 * TKM + a_6 * TKM^2$$

wobei "TKM" die Tausendkornmasse des Erntegut-Teilstroms der Bypass-Vorrichtung ist, und "$a_5, a_6$" weitere Vorfaktoren sind. Die Tausendkornmasse kann als zusätzlicher Parameter oder als Wechselwirkung und somit auch als Multiplikator eingesetzt werden.

Bei einer vorteilhaften Weiterbildung der erfindungsgemäßen Lösung ist vorgesehen, dass bei einem Ausfall der optischen Messvorrichtung der Bypass-Vorrichtung mittels der kapazitiven Messvorrichtung der Bypass-Vorrichtung ein feuchtigkeitsabhängiger Messwert des Erntegut-Teilstroms ermittelt wird. Somit hängt die elektrische Kapazität des Kondensators der kapazitiven Messvorrichtung von der Querschnittsverteilung des geförderten Erntegut-Teilstroms und der Feuchtigkeit des geförderten Erntegut-Teilstroms und der Dichte des geförderten Erntegut-Teilstroms ab, jedoch ist die Querschnittsverteilung des geförderten Erntegut-Teilstroms in der Bypass-Vorrichtung eine konstante, die zeitlich nicht variiert. Daher variiert die elektrische Kapazität des Kondensators der kapazitiven Messvorrichtung lediglich in Abhängigkeit der Feuchtigkeit des geförderten Erntegut-Teilstroms und der Dichte des geförderten Erntegut-Teilstroms. Es ist jedoch so, dass die elektrische Kapazität stärker von der Feuchtigkeit des geförderten Erntegut-Teilstroms als von der Dichte des geförderten Erntegut-Teilstroms beeinflusst wird, sodass die elektrische Kapazität des Kondensators der kapazitiven Messvorrichtung hilfsweise als feuchtigkeitsabhängiger Messwert bzw. Feuchtigkeitswert des Erntegut-Teilstroms eingestuft und/oder genutzt werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung nähererläutert, wobei sich gleiche Bezugszeichen auf gleiche oder ähnliche oder funktional gleiche Komponenten beziehen

Es zeigen, jeweils schematisch,

Fig. 1    einen selbstfahrenden Mähdrescher,

Fig. 2    eine Frontansicht einer Bypass-Vorrichtung,

Fig. 3    eine Rückansicht der Bypass-Vorrichtung,

Fig. 4    eine schematische Frontansicht der Bypass-Vorrichtung, in der eine Kolbenstange sichtbar ist.

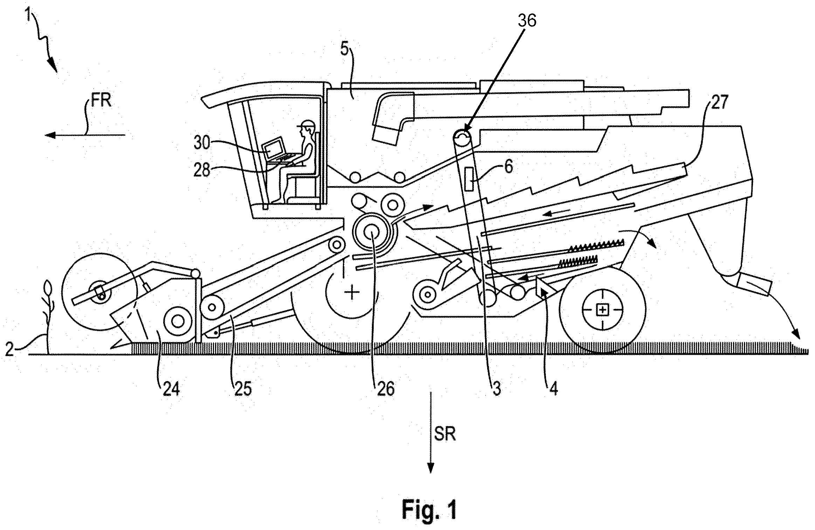

Die Fig. 1 zeigt einen selbstfahrenden Mähdrescher 1 zur Aufnahme und Behandlung von Erntegut 2. Der selbstfahrenden Mähdrescher kann eine Rechnereinheit 28 mit einem Bildschirm 30 für einen Fahrer der selbstfahrenden Mähdrescher 1 aufweisen. Im Betrieb des Mähdreschers 1 fährt der Mähdrescher 1 in eine Fahrtrichtung FR durch den Erntegutbestand 2 und nimmt dabei mit einem Schneidwerk 24 das Erntegut 2 auf. Mit einem Schrägförderer 25 wird dieses Erntegut 2 zum Dreschwerk 26 gefördert. In dem Dreschwerk 26, einer Abscheidung 27 und einer Förder- und Reinigungsvorrichtung 4 werden die Körner vom restlichen Erntegut getrennt, sodass ein Erntegutstrom entsteht.

Der Mähdrescher 1 weist einen Kornelevator 3 zur Förderung eines Erntegutstroms von der Förder- und Reinigungsvorrichtung 4 zu einem Korntank 5 des Mähdreschers 1 auf. Hierbei ist am Kornelevator 3 eine Bypass-Vorrichtung 6 derart angeordnet, dass ein Erntegut-Teilstroms des durch den Kornelevator 3 geführten Erntegutstroms in die Bypass-Vorrichtung 6 einströmt. Der Erntegut-Teilstrom strömt vom Kornelevator 3 in die Bypass-Vorrichtung 6 ein und anschließend durchströmt der Erntegut-Teilstrom die Bypass-Vorrichtung 6, wobei der Erntegut-Teilstrom nach dem durchströmen der Bypass-Vorrichtung 6 wieder zurück in den Kornelevator 3 strömt.

Der Mähdrescher 1 kann eine Ertragsmessvorrichtung 36 zur Ertragsmessung des Erntegutstroms aufweisen, wobei die Ertragsmessvorrichtung 36 im und/oder am Kornelevator 3 angeordnet ist und von der Bypass-Vorrichtung 6 beabstandet angeordnet ist. Diese Ertragsmessvorrichtung 36 kann beispielweise zwischen der Bypass-Vorrichtung 6 und dem Korntank 5 ausgebildet sein. Diese Ertragsmessvorrichtung 36 kann eine optische Ertragsmessvorrichtung, eine kraftbasierte Ertragsmessvorrichtung oder eine kapazitive Messvorrichtung sein.

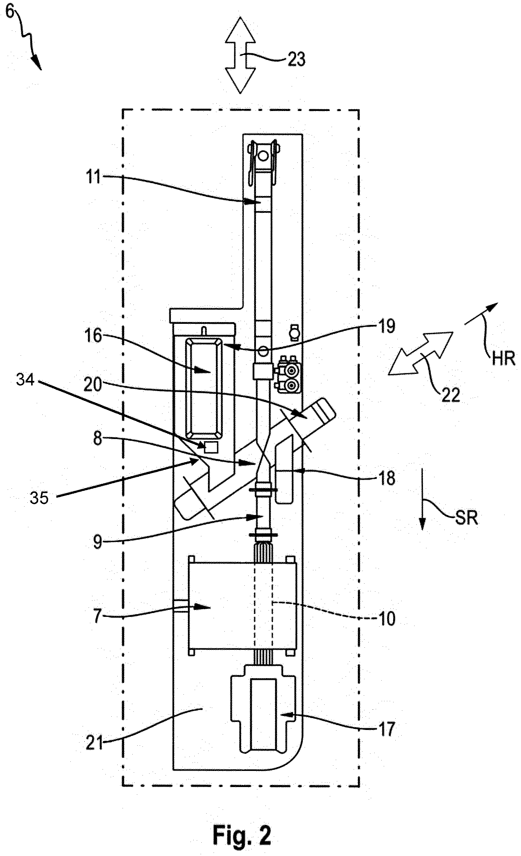

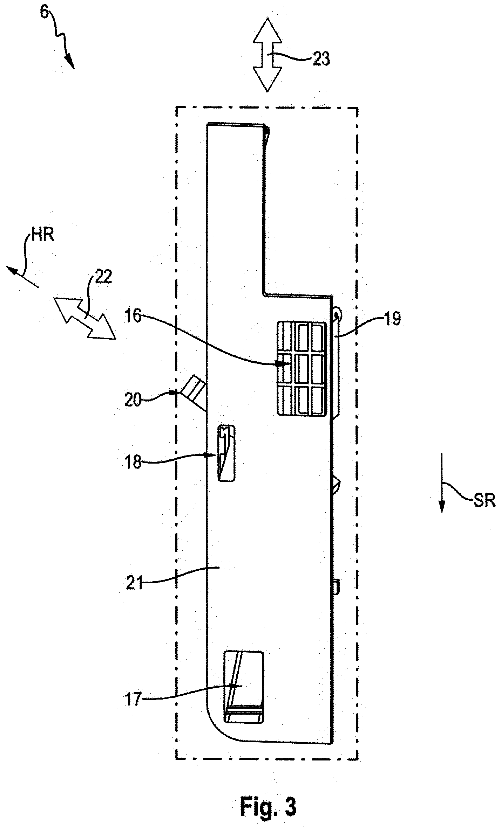

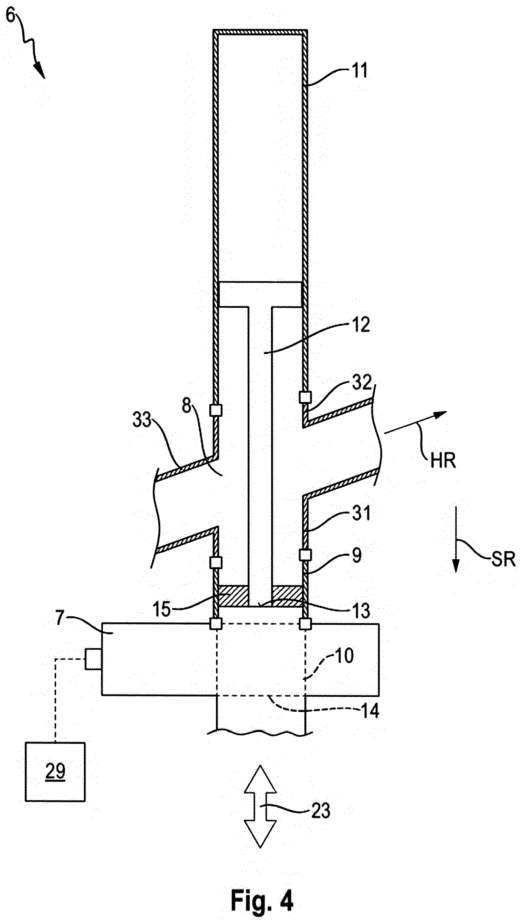

In der Fig. 2 ist eine Frontansicht der Bypass-Vorrichtung 6 und in der Fig. 3 ist eine Rückansicht der Bypass-Vorrichtung 6 gezeigt. Die Fig. 4 zeigt eine schematische Frontansicht eines Teilbereiches der Bypass-Vorrichtung 6, wobei eine Kolbenstange 12 sichtbar dargestellt ist.

Die Bauteile der Bypass-Vorrichtung 6 können auf einer Bodenplatte 21 der Bypass-Vorrichtung 6 angeordnet und/oder fixiert sein. Die Bodenplatte 21 der Bypass-Vorrichtung 6 weist eine Zuführungsöffnung 16 auf, durch die der Erntegut-Teilstroms ausgehend von dem Kornelevator 3 in die Bypass-Vorrichtung 6 einströmt. Die Bypass-Vorrichtung 6 weist einen Schneckenförderer 8 und einen Sammelbehälter 19 auf, wobei der Sammelbehälter 19 zwischen der Zuführungsöffnung 16 und dem Schneckenförderer 8 derart ausgebildet und/oder angeordnet ist, sodass der Erntegut-Teilstrom von der Zuführungsöffnung 16 in den Sammelbehälter 19 einströmt und anschließend vom Sammelbehälter 19 in den Schneckenförderer 8 einströmt. Hierfür ist die Zuführungsöffnung 16 oberhalb eines Teiles des Schneckenförderers 8 angeordnet, sodass der Erntegut-Teilstrom aufgrund der Gravitation im Wesentlichen entlang der Schwerkraftrichtung SR strömt und über eine nicht dargestellte Einströmungsöffnung in den Schneckenförderer einströmt.

Die Bypass-Vorrichtung 6 weist wenigstens eine kapazitive Messvorrichtung 34 zur Ermittlung von Ernteguteigenschaften des Erntegut-Teilstromes auf, wobei die kapazitive Messvorrichtung 34 im und/oder am Sammelbehälter 19 angeordnet ist. Die Bypass-Vorrichtung 6 kann eine nicht dargestellte Füllstandsensoreinheit zur Erfassung des Füllstandes des Erntegut-Teilstroms im Sammelbehälter 19 aufweisen. Diese Füllstandsensoreinheit kann bezüglich der Schwerkraftrichtung SR auf der gleichen Position oder oberhalb der kapazitiven Messvorrichtung 34 der Bypass-Vorrichtung 6 ausgebildet sein. Der Sammelbehälter weist zwischen der Zuführungsöffnung 16 und dem Schneckenförderer 8 wenigstens abschnittsweise eine Kanalverjüngung 35 auf, wobei die kapazitive Messvorrichtung 34 der Bypass-Vorrichtung 6 in und/oder an der Kanalverjüngung 35 des Sammelbehälters 19 angeordnet ist.

Der Schneckenförderer 8 ist zur Förderung des Erntegut-Teilstroms zu einer optischen Messvorrichtung 7 der Bypass-Vorrichtung 6 ausgebildet. Der Schneckenförderer 8 weist einen Rohrkörper 33 auf, der sich entlang der Förderrichtung 22 erstreckt. Der Schneckenförderer 8 umfasst einen Antrieb 20, der im Rohrkörper 33 drehbar gelagerte und nicht dargestellte Schneckenwindungen antreiben kann. Durch die Drehbewegung der Schneckenwindungen wird der im Schneckenförderer 8 eingetretene Erntegut-Teilstrom in Richtung der Hauptförderrichtung HR transportiert, um die optische Messvorrichtung 7 mit dem Erntegut-Teilstrom zu versorgen. Hierfür kann der Rohrkörper 33 ein erstes Querrohr 31 aufweisen, wobei der Rohrkörper 33 und das Querrohr 31 einteilig ausgebildet sein können. An dem Querrohr 31, welches eine Ausströmungsöffnung aufweist, ist ein Zuführrohr 9 zur Führung des Erntegut-Teilstroms vom Schneckenförderer 8 zur optischen Messvorrichtung 7 angeordnet. Die optische Messvorrichtung 7 umfasst ein Rohr 10 zur Führung des Erntegut-Teilstroms, sodass die Ermittlung und/oder Messung von Ernteguteigenschaften des Erntegut-Teilstromes durchgeführt werden kann.

Mit der optischen Messvorrichtung 7 können beispielsweise die Wassermasse, die Proteinmasse, die Kohlenhydratmasse und/oder die Fettmasse und/oder die Ölmasse des Erntegut-Teilstromes ermittelt werden. Hierfür weist die optische Messvorrichtung 7 eine nicht dargestellte Lichtquelle auf, die den Erntegut-Teilstrom beim Durchströmen der Messvorrichtung 7 belichtet. Die optische Messvorrichtung 7 erfasst mit einem nicht dargestellten Sensor massenproportionale Absorptionsspektren und ermittelt anhand dieser Messdaten die Wassermasse, die Proteinmasse, die Kohlenhydratmasse und/oder die Fettmasse und/oder die Ölmasse des Erntegut-Teilstromes.

Die Bypass-Vorrichtung 6 ist zur Reinigung des Rohres 10 der optischen Messvorrichtung 7 und zur Sicherstellung eines Leerzustandes des Rohres 10 der optischen Messvorrichtung 7 ausgebildet, wobei die Bypass-Vorrichtung 6 hierfür eine einzige Zylindervorrichtung 11 mit einer beweglichen Kolbenstange 12 zur Reinigung des Rohres 10 der optischen Messvorrichtung 7 und zur Sicherstellung eines Leerzustandes des Rohres 10 der optischen Messvorrichtung 7 aufweist. Die Kolbenstange 12 kann entlang der Bewegungsrichtung 23 bewegt werden. In diesem Ausführungsbeispiel ist die Bewegungsrichtung 23 der Kolbenstange 12 nicht rechtwinkelig zur Förderrichtung 22 des Schneckenförderers ausgerichtet, sodass die Kolbenstange 12 wenigstens teilweise durch den Rohrkörper 33 geführt werden kann und/oder wenigstens teilweise im Rohrkörper 33 positioniert werden kann. Hierfür kann der Rohrkörper 33 ein zweites Querrohr 32 aufweisen. Der Rohrkörper 33 und das zweite Querrohr 32 können einteilig ausgebildet sein können. Das erste Querrohr 31 und das zweite Querrohr 32 können am Rohrkörper 33 derart positioniert sein, dass die Kolbenstange 12 sich vom ersten Querrohr 31 zum zweiten Querrohr 32 oder umgekehrt bewegen kann. Hierbei kann es vorgesehen sein, dass der Schneckenförderer 8 die Förderung stoppt und die beispielsweise die Lage der nicht dargestellten Schneckenwindungen derart ausgerichtet wird, dass die Kolbenstange 12 reibungsfrei zwischen den Schneckenwindungen des Schneckenförderers 8 bewegt werden kann.

Die Kolbenstange 12, insbesondere eine Stirnfläche 13 der Kolbenstange 12, kann wenigstens eine Öffnungsposition einnehmen kann, in der der Schneckenförderer 8, das Zuführrohr 9 und das Rohr 10 derart zur Führung des Erntegut-Teilstroms miteinander verbunden sind, dass ein vom Schneckenförderer 8 geförderter Erntegut-Teilstrom im Wesentlichen in das Zuführrohr 9 einströmt und anschließend das Rohr 10 durchströmt.

Der Schneckenförderer 8 kann eine Zwischenöffnung 18 aufweisen, die bezüglich der Hauptförderrichtung HR stromab der Ausströmungsöffnung ausgebildet ist, wobei über diese Zwischenöffnung 18 ein Teil des Erntegut-Teilstroms, der nicht in die Ausströmungsöffnung eingeströmt ist, zurück in den Kornelevator 3 strömen kann.

Die Kolbenstange 12, insbesondere die Stirnfläche 13 der Kolbenstange 12, kann wenigstens eine Zwischenposition einnehmen, in der wenigstens ein Teil der Kolbenstange 12 unterdrückt, dass der Erntegut-Teilstrom von dem Schneckenförderer 8 zum Rohr 10 strömen kann, sodass ein vom Schneckenförderer 8 ausgehender Erntegut-Teilstrom nicht in das Rohr 10 der optischen Messvorrichtung 7 einströmt. Diese Situation ist in der Fig. 4 dargestellt. Hierfür weist die die Kolbenstange 12 beispielweise ein Reinigungselement 15, insbesondere ein bürstenartiges Reinigungselement 15, auf.

Die Kolbenstange 12, insbesondere die Stirnfläche 13 der Kolbenstange 12, kann wenigstens eine Endposition einnehmen kann, in der wenigstens ein Teil der Kolbenstange 12 in einer Endöffnung 14 des Rohres 10 der optischen Messvorrichtung 7 angeordnet ist. Die Bypass-Vorrichtung 6 umfasst eine Ausführungsöffnung 17, durch die der Erntegut-Teilstrom nach dem Durchströmen der optischen Messvorrichtung 7 in den Kornelevator 3 einströmen kann.

Wie in der Fig. 3 dargestellt, können die Zuführungsöffnung 16, die Ausführungsöffnung 17 und die Zwischenöffnung 18 jeweils Öffnung und/oder Bohrung in der Bodenplatte 21 ausbilden und/oder umfassen.

Die optische Messvorrichtung 7 ermittelt, ob eine Reinigung und/oder eine Referenzierung erforderlich ist. Die optische Messvorrichtung 7 übermittelt dem selbstfahrenden Mähdrescher 1, insbesondere einer Steuereinheit 29 des Mähdreschers 1, datentechnisch ein Reinigungs-Signal und/oder ein Referenzierung-Signal, wenn eine Reinigung und/oder eine Referenzierung der optischen Messvorrichtung 7 erforderlich ist. Nach der Erfassung des Reinigungs-Signals und/oder des Referenzierung-Signals führt der selbstfahrende Mähdrescher 1, insbesondere die Steuereinheit 29 des Mähdreschers 1, mittels der Bypass-Vorrichtung 6 eine Reinigung der optischen Messvorrichtung 7 aus und/oder ermöglicht eine Referenzierung der optischen Messvorrichtung 7 durch eine Verhinderung der Einströmung des Erntegut-Teilstroms in die optische Messvorrichtung 7.

Wenn die optische Messvorrichtung 7 ein Reinigungs-Signal übermittelt, wird die die Kolbenstange 12 in die Endposition bewegt, um eine Reinigung der optischen Messvorrichtung 7, insbesondere des Rohrs 10, zu bewirken.

Wenn die optische Messvorrichtung 7 ein Referenzierung-Signals übermittelt, wird die Kolbenstange 12 derart angesteuert, dass sich die Kolbenstange 12 in einer Zwischenposition positioniert, sodass der Erntegut-Teilstrom nicht in das Rohr 10 der optischen Messvorrichtung 12 einströmen kann. Dieser Zustand ist in der Fig. 4 dargestellt.

Wenn die optische Messvorrichtung 7 kein Reinigungs-Signal und kein Referenzierung-Signal übermittelt, wird die Kolbenstange 12 derart angesteuert, dass sich die Kolbenstange 12 in einer Öffnungsposition positioniert, sodass ein vom Schneckenförderer 8 geförderter Erntegut-Teilstrom im Wesentlichen in das Zuführrohr 9 einströmen kann und anschließend das Rohr 10 durchströmt. Hierbei kann vorgesehen sein, dass der Schneckenförderer 8 mit der Förderung des Erntegut-Teilstroms beginnt, wenn die die Kolbenstange 12 eine Öffnungsposition eingenommen hat.

**Bezugszeichenliste**

1 Mähdrescher
2 Erntegut
3 Kornelevator
4 Förder- und Reinigungsvorrichtung
5 Korntank
6 Bypass-Vorrichtung
7 optische Messvorrichtung
8 Schneckenförderer
9 Zuführrohr
10 Rohr
11 Zylindervorrichtung
12 Kolbenstange
13 Stirnfläche
14 Endöffnung
15 Reinigungselement
16 Zuführungsöffnung
17 Ausführungsöffnung
18 Zwischenöffnung
19 Sammelbehälter
20 Antrieb
21 Bodenplatte
22 Förderrichtung
23 Bewegungsrichtung
24 Schneidwerk
25 Schrägförderer
26 Dreschwerk
27 Abscheidung
28 Recheneinheit
29 Steuereinheit
30 Bildschirm
31 erstes Querrohr
32 zweites Querrohr
33 Rohrkörper
34 kapazitive Messvorrichtung
35 Kanalverjüngung
36 Ertragsmessvorrichtung

FR Fahrtrichtung
SR Schwerkraftrichtung
HR Hauptförderrichtung

**Patentansprüche**

1. Selbstfahrender Mähdrescher (1) zur Aufnahme und Behandlung von Erntegut (2),

- mit einem Kornelevator (3) zur Förderung eines Erntegutstroms von einer Förder- und Reinigungsvorrichtung (4) des Mähdreschers (1) zu einem Korntank (5) des Mähdreschers (1),
- mit einer am Kornelevator (3) angeordneten Bypass-Vorrichtung (6) zur Führung eines Erntegut-Teilstroms des durch den Kornelevator (3) geführten Erntegutstroms,

**dadurch gekennzeichnet,**

- **dass** die Bypass-Vorrichtung (6) eine optische Messvorrichtung (7) zur Ermittlung von Ernteguteigenschaften, insbesondere zur Ermittlung von Inhaltsstoffen, des Erntegut-Teilstromes aufweist, und
- **dass** die Bypass-Vorrichtung (6) wenigstens eine kapazitive Messvorrichtung (34) zur Ermittlung von Ernteguteigenschaften des Erntegut-Teilstromes aufweist.

2. Selbstfahrender Mähdrescher (1) nach Anspruch 1,
**dadurch gekennzeichnet,**
**dass** die Bypass-Vorrichtung (6) einen Sammelbehälter (19) zum Sammeln des Erntegut-Teilstroms aufweist, wobei die kapazitive Messvorrichtung (34) im und/oder am Sammelbehälter (19) angeordnet ist.

3. Selbstfahrender Mähdrescher (1) nach Anspruch 2,
**dadurch gekennzeichnet,**
**dass** der Sammelbehälter (19) wenigstens eine Füllstandsensoreinheit zur Erfassung des Füllstandes des Erntegut-Teilstroms im Sammelbehälter (19) aufweist.

4. Selbstfahrender Mähdrescher (1) nach einem der vorangehenden Ansprüche,
**dadurch gekennzeichnet,**
**dass** der Mähdrescher (1) eine Ertragsmessvorrichtung (36) zur Ertragsmessung des Erntegutstroms aufweist, wobei die Ertragsmessvorrichtung (36) im und/oder am Kornelevator (3) angeordnet ist und von der Bypass-Vorrichtung (6) beabstandet angeordnet ist.

5. Selbstfahrender Mähdrescher (1) nach Anspruch 4,
**dadurch gekennzeichnet,**
**dass** die Ertragsmessvorrichtung (36) zwischen der Bypass-Vorrichtung (6) und dem Korntank (5) ausgebildet ist.

6. Selbstfahrender Mähdrescher (1) nach Anspruch 4 oder 5,
**dadurch gekennzeichnet,**
**dass** die Ertragsmessvorrichtung (36) eine optische Ertragsmessvorrichtung ist, oder dass die Ertragsmessvorrichtung (36) eine kraftbasierte Ertragsmessvorrichtung ist, oder dass die Ertragsmessvorrichtung (36) eine kapazitive Messvorrichtung ist.

7. Selbstfahrender Mähdrescher (1) nach einem der vorangehenden Ansprüche,
**dadurch gekennzeichnet,**
**dass** die Bypass-Vorrichtung (6) einen Schneckenförderer (8) zur Förderung des Erntegut-Teilstroms zur optischen Messvorrichtung (7) aufweist.

8. Selbstfahrender Mähdrescher (1) nach einem der vorangehenden Ansprüche,
**dadurch gekennzeichnet,**

- **dass** die Bypass-Vorrichtung (6) eine Zuführungsöffnung (16) aufweist, durch die der Erntegut-Teilstrom aus dem Kornelevator (3) in die Bypass-Vorrichtung (6) einströmen kann, und/oder
- **dass** die Bypass-Vorrichtung (6) eine Ausführungsöffnung (17) aufweist, durch die der Erntegut-Teilstrom nach dem Durchströmen der optischen Messvorrichtung (7) in den Kornelevator (3) einströmen kann, und/oder
- **dass** die Bypass-Vorrichtung (6) eine Zwischenöffnung (18) aufweist, durch die der Erntegut-Teilstrom in den Kornelevator (3) einströmen kann.

9. Selbstfahrender Mähdrescher (1) nach Anspruch 8,
**dadurch gekennzeichnet,**
**dass** zwischen der Zuführungsöffnung (16) und dem Schneckenförderer (8) der Sammelbehälter (19) zum Sammeln des Erntegut-Teilstroms ausgebildet ist.

10. Selbstfahrender Mähdrescher (1) nach Anspruch 9,
**dadurch gekennzeichnet,**
**dass** der Sammelbehälter (19) zwischen der Zuführungsöffnung (16) und dem Schneckenförderer (8) wenigstens abschnittsweise eine Kanalverjüngung (35) aufweist.

11. Selbstfahrender Mähdrescher (1) nach Anspruch 10,
**dadurch gekennzeichnet,**

**dass** die kapazitive Messvorrichtung (34) der Bypass-Vorrichtung (6) in und/oder an der Kanalverjüngung (35) des Sammelbehälters (19) angeordnet ist.

12. Verfahren zum Betrieb eines selbstfahrenden Mähdreschers (1) nach einem der vorangehenden Ansprüche,
    **dadurch gekennzeichnet,**

    - **dass** ein Feuchtigkeitswert des Erntegut-Teilstroms der Bypass-Vorrichtung (6) mittels der optischen Messvorrichtung (7) der Bypass-Vorrichtung (6) ermittelt wird, und
    - **dass** eine elektrische Kapazität der kapazitiven Messvorrichtung (34) der Bypass-Vorrichtung (6) ermittelt wird, und
    - **dass** aus dem ermittelten Feuchtigkeitswert und aus der ermittelten elektrischen Kapazität ein Hektolitergewicht des Erntegut-Teilstroms der Bypass-Vorrichtung (6) ermittelt wird.

13. Verfahren nach Anspruch 12,
    **dadurch gekennzeichnet,**
    **dass** die Ermittlung des Feuchtigkeitswertes des Erntegut-Teilstroms und/oder die Ermittlung der elektrischen Kapazität der kapazitiven Messvorrichtung (34) während eines Betriebes des Mähdreschers (1) kontinuierlich ausgeführt wird.

14. Verfahren nach Anspruch 12 oder 13,
    **dadurch gekennzeichnet,**

    - **dass** der ermittelte Feuchtigkeitswert und die ermittelte elektrische Kapazität zur Ermittlung des Hektolitergewicht des Erntegut-Teilstroms jeweils linear einfließen, und/oder
    - **dass** der ermittelte Feuchtigkeitswert und die ermittelte elektrische Kapazität zur Ermittlung des Hektolitergewichts des Erntegut-Teilstroms jeweils quadratisch einfließen, und/oder
    - **dass** zur Ermittlung des Hektolitergewicht des Erntegut-Teilstroms neben dem ermittelten Feuchtigkeitswert und der ermittelten elektrischen Kapazität mehrere erntegutabhängige Vorfaktoren einfließen.

15. Verfahren nach einem der Ansprüche 12 bis 14,
    **dadurch gekennzeichnet,**
    **dass** bei einem Ausfall der optischen Messvorrichtung (7) der Bypass-Vorrichtung (6) mittels der kapazitiven Messvorrichtung (34) der Bypass-Vorrichtung (6) ein feuchtigkeitsabhängiger Messwert des Erntegut-Teilstroms ermittelt wird.

**Claims**

1. A self-propelled combine harvester (1) for picking up and for the treatment of harvested material (2),

    - with a grain elevator (3) for conveying a flow of harvested material from a conveying and cleaning device (4) of the combine harvester (1) to a grain tank (5) of the combine harvester (1),
    - with a bypass device (6) disposed on the grain elevator (3) for guiding a partial flow of harvested material which is from the flow of harvested material guided through the grain elevator (3),

    **characterized in that**

    - the bypass device (6) has an optical measuring device (7) for determining harvested material properties, in particular for determining constituents, of the partial flow of harvested material, and
    - the bypass device (6) has at least one capacitive measuring device (34) for determining harvested material properties of the partial flow of harvested material.

2. The self-propelled combine harvester (1) according to claim 1,
    **characterized in that**
    the bypass device (6) has a collecting container (19) for collecting the partial flow of harvested material, wherein the capacitive measuring device (34) is disposed in and/or on the collecting container (19).

3. The self-propelled combine harvester (1) according to claim 2,

**characterized in that**
the collecting container (19) has at least one fill level sensor unit for detecting the fill level of the partial flow of harvested material in the collecting container (19).

4. The self-propelled combine harvester (1) according to one of the preceding claims,
**characterized in that**
the combine harvester (1) has a yield measuring device (36) for measuring the yield of the flow of harvested material, wherein the yield measuring device (36) is disposed in and/or on the grain elevator (3) and at a distance from the bypass device (6).

5. The self-propelled combine harvester (1) according to claim 4,
**characterized in that**
the yield measuring device (36) is formed between the bypass device (6) and the grain tank (5).

6. The self-propelled combine harvester (1) according to claim 4 or claim 5,
**characterized in that**
the yield measuring device (36) is an optical yield measuring device, or **in that** the yield measuring device (36) is a force-based yield measuring device, or **in that** the yield measuring device (36) is a capacitive measuring device.

7. The self-propelled combine harvester (1) according to one of the preceding claims,
**characterized in that**
the bypass device (6) has a screw conveyor (8) for conveying the partial flow of harvested material to the optical measuring device (7).

8. The self-propelled combine harvester (1) according to one of the preceding claims,
**characterized in that**

   - the bypass device (6) has an infeed opening (16), through which the partial flow of harvested material coming from the grain elevator (3) can flow into the bypass device (6), and/or
   - the bypass device (6) has an outlet opening (17), through which the partial flow of harvested material can flow into the grain elevator (3) after passing through the optical measuring device (7), and/or
   - the bypass device (6) has an intermediate opening (18), through which the partial flow of harvested material can flow into the grain elevator (3).

9. The self-propelled combine harvester (1) according to claim 8,
**characterized in that**
the collecting container (19) for collecting the partial flow of harvested material is formed between the infeed opening (16) and the screw conveyor (8).

10. The self-propelled combine harvester (1) according to claim 9,
**characterized in that**
the collecting container (19) has a channel reduction (35) at least in sections between the infeed opening (16) and the screw conveyor (8).

11. The self-propelled combine harvester (1) according to claim 10,
**characterized in that**
the capacitive measuring device (34) of the bypass device (6) is disposed in and/or on the channel reduction (35) of the collecting container (19).

12. A method for operating a self-propelled combine harvester (1) according to one of the preceding claims,
**characterized in that**

   - a moisture value for the partial flow of harvested material of the bypass device (6) is determined by means of the optical measuring device (7) of the bypass device (6), and
   - an electrical capacitance of the capacitive measuring device (34) of the bypass device (6) is determined, and
   - a hectorlitre weight of the partial flow of harvested material of the bypass device (6) is determined from the determined moisture value and from the determined electrical capacitance.

**13.** The method according to claim 12,
**characterized in that**
the determination of the moisture value for the partial flow of harvested material and/or the determination of the electrical capacitance of the capacitive measuring device (34) is carried out continuously during an operation of the combine harvester (1).

**14.** The method according to claim 12 or claim 13,
**characterized in that**

- the determined moisture value and the determined electrical capacitance are respectively linearly incorporated into the determination of the hectorlitre weight of the partial flow of harvested material, and/or
- the determined moisture value and the determined electrical capacitance are respectively quadratically incorporated into the determination of the hectorlitre weight of the partial flow of harvested material, and/or
- in addition to the determined moisture value and the determined electrical capacitance, a plurality of harvested material-dependent pre-factors are incorporated into the determination of the hectorlitre weight of the partial flow of harvested material.

**15.** The method according to one of claims 12 to 14,
**characterized in that**
in the event of a failure of the optical measuring device (7) of the bypass device (6), a moisture-dependent measured value for the partial flow of harvested material is determined by means of the capacitive measuring device (34) of the bypass device (6).

**Revendications**

**1.** Moissonneuse-batteuse (1) automotrice destinée au ramassage et au traitement de produits récoltés (2),

- comprenant un élévateur de grains (3) pour transporter un flux de récolte depuis un dispositif de convoyage et de nettoyage (4) de la moissonneuse-batteuse (1) vers une trémie à grains (5) de la moissonneuse-batteuse (1),
- comprenant un dispositif de dérivation (6) installé sur l'élévateur de grains (3) et destiné au guidage d'un flux partiel de récolte du flux de récolte guidé à travers l'élévateur de grains (3),
**caractérisée en ce que**
- le dispositif de dérivation (6) présente un dispositif de mesure optique (7) pour déterminer des propriétés de récolte, notamment pour déterminer des composants, du flux partiel de récolte, et
- **en ce que** le dispositif de dérivation (6) présente au moins un dispositif de mesure capacitif (34) destiné à déterminer des propriétés de récolte du flux partiel de récolte.

**2.** Moissonneuse-batteuse (1) automotrice selon la revendication 1,
**caractérisée en ce que**
le dispositif de dérivation (6) présente un réservoir collecteur (19) pour collecter le flux partiel de récolte, le dispositif de mesure capacitif (34) étant installé dans et/ou sur le réservoir collecteur (19).

**3.** Moissonneuse-batteuse (1) automotrice selon la revendication 2,
**caractérisée en ce que**
le réservoir collecteur (19) présente au moins une unité de capteur de niveau pour détecter le niveau de remplissage du flux partiel de récolte dans le réservoir collecteur (19).

**4.** Moissonneuse-batteuse (1) automotrice selon une des revendications précédentes,
**caractérisée en ce que**
la moissonneuse-batteuse (1) présente un dispositif de mesure de rendement (36), le dispositif de mesure de rendement (36) étant placé dans et/ou sur l'élévateur de grains (3) et étant installé à distance du dispositif de dérivation (6).

**5.** Moissonneuse-batteuse (1) automotrice selon la revendication 4,
**caractérisée en ce que**
le dispositif de mesure de rendement (36) est réalisé entre le dispositif de dérivation (6) et la trémie à grains (5).

**6.** Moissonneuse-batteuse (1) automotrice selon la revendication 4 ou 5,
**caractérisée en ce que**
le dispositif de mesure de rendement (36) est un dispositif de mesure de rendement optique, ou **en ce que** le dispositif de mesure de rendement (36) est un dispositif de mesure de rendement basé sur la force, ou **en ce que** le dispositif de mesure de rendement (36) est un dispositif de mesure capacitif.

**7.** Moissonneuse-batteuse (1) automotrice selon une des revendications précédentes,
**caractérisée en ce que**
le dispositif de dérivation (6) présente un convoyeur à vis (8) pour le convoyage du flux partiel de récolte vers le dispositif de mesure optique (7).

**8.** Moissonneuse-batteuse (1) automotrice selon une des revendications précédentes,
**caractérisée en ce que**

- le dispositif de dérivation (6) présente une ouverture d'entrée (16) à travers laquelle le flux partiel de récolte peut s'écouler de l'élévateur de grains (3) dans le dispositif de dérivation (6), et/ou
- **en ce que** le dispositif de dérivation (6) présente une ouverture de sortie (17) à travers laquelle le flux partiel de récolte peut s'écouler dans l'élévateur de grains (3), après avoir traversé le dispositif de mesure optique (7), et/ou
- **en ce que** le dispositif de dérivation (6) présente une ouverture intermédiaire (18) à travers laquelle le flux partiel de récolte peut s'écouler dans l'élévateur de grains (3).

**9.** Moissonneuse-batteuse (1) automotrice selon la revendication 8,
**caractérisée en ce que**
le réservoir collecteur (19) destiné à collecter le flux partiel de récolte est réalisé entre l'ouverture d'entrée (16) et le convoyeur à vis (8).

**10.** Moissonneuse-batteuse (1) automotrice selon la revendication 9,
**caractérisée en ce que**
le réservoir collecteur (19) présente au moins par portions un rétrécissement de canal (35) entre l'ouverture d'entrée (16) et le convoyeur à vis (8).

**11.** Moissonneuse-batteuse (1) automotrice selon la revendication 10,
**caractérisée en ce que**
le dispositif de mesure capacitif (34) du dispositif de dérivation (6) est placé dans et/ou sur le rétrécissement de canal (35) du réservoir collecteur (19).

**12.** Procédé de fonctionnement d'une moissonneuse-batteuse (1) automotrice selon une des revendications précédentes,
**caractérisé en ce que**

- une valeur d'humidité du flux partiel de récolte du dispositif de dérivation (6) est déterminée au moyen du dispositif de mesure optique (7) du dispositif de dérivation (6), et
- **en ce qu'**une capacité électrique du dispositif de mesure capacitif (34) du dispositif de dérivation (6) est déterminée, et
- **en ce qu'**une masse à l'hectolitre du flux partiel de récolte du dispositif de dérivation (6) est déterminée à partir de la valeur d'humidité déterminée et à partir de la capacité électrique déterminée.

**13.** Procédé selon la revendication 12,
**caractérisé en ce que**
la détermination de la valeur d'humidité du flux partiel de récolte et/ou la détermination de la capacité électrique du dispositif de mesure capacitif (34) est effectuée en continu pendant un fonctionnement de la moissonneuse-batteuse (1).

**14.** Procédé selon la revendication 12 ou 13,
**caractérisé en ce que**

- la valeur d'humidité déterminée et la capacité électrique déterminée sont prises en compte respectivement de façon linéaire pour la détermination de la masse à l'hectolitre du flux partiel de récolte, et/ou

- **en ce que** la valeur d'humidité déterminée et la capacité électrique déterminée sont prises en compte respectivement au carré pour la détermination de la masse à l'hectolitre du flux partiel de récolte, et/ou
- **en ce que** pour la détermination de la masse à l'hectolitre du flux partiel de récolte, plusieurs facteurs préalables, dépendant de la récolte, sont pris en compte, en plus de la valeur d'humidité déterminée et de la capacité électrique déterminée.

15. Procédé selon une des revendications 12 à 14,
**caractérisé en ce que**
en cas de défaillance du dispositif de mesure optique (7) du dispositif de dérivation (6), une valeur de mesure, dépendant de l'humidité, du flux partiel de récolte est déterminée au moyen du dispositif de mesure capacitif (34) du dispositif de dérivation (6).

Fig. 1

**Fig. 2**

6

23

HR

22

16

20

18

21

19

SR

17

**Fig. 3**

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0908086 A1

- US 6285198 B1